# EUROPEAN PATENT SPECIFICATION

(11) **EP 0 495 464 B1**
(45) Date of publication and mention of the grant of the patent: **15.05.1996**
(21) Application number: 92100527.8
(22) Date of filing: 14.01.1992
(51) Int. Cl.: F25D 29/00, G05D 23/19, G05D 23/24

(54) **Refrigeration temperature control system**
Kältetemperaturregelvorrichtung
Système de régulation de température frigorifique

(30) Priority: 15.01.1991 US 641292
(43) Date of publication of application: 22.07.1992
(73) Proprietor: THERMO KING CORPORATION, Minneapolis Minnesota 55420 (US); HONEYWELL INC., Minneapolis Minnesota 55408 (US)
(72) Inventor: Truckenbrod, Greg, Fridley, MN 55421 (US); Wacker, Paul C., Plymouth, MN (US)
(74) Representative: Schwan, Gerhard, Dipl.-Ing.

(56) References cited:
- EP-A- 0 130 528
- EP-A- 0 240 977
- GB-A- 1 485 666
- US-A- 3 768 545

## Description

The present invention is generally related to systems for the control of the temperature within a refrigerated space, and is more particularly related to a refrigeration temperature control system utilizing multiple sensors.

It is known in the art to control the temperature of a space used to store or transport perishable materials, such as foodstuffs. In controlling temperature in such a space, it is most difficult when the space is used to-transport the perishable materials such as with refrigeration trucks.

Much of the difficulty arises because of the change in thermal loading caused by large changes in the ambient with respect to time of day, geographical location, and weather conditions. If the temperature within the refrigerated space becomes too high, the cargo is exposed to excess risk of spoilage. If the temperature within the refrigerated space becomes too low, portions of the cargo may be destroyed from freezing.

US-A-4 715 190 discusses a rudimentary temperature control system. An advanced microprocessor based temperature control system is taught in US-A-4 663 725. This system employs temperature sensors for the return and discharge of air. A fault recovery algorithm permits the system to switch between sensors. US-A-4 589 060 also discusses a microprocessor based temperature control system.

Techniques for control of the refrigeration process are described in US-A-4 742 689 and US-A-4 934 155. These references show control of temperature through the use of hot gas bypass of the compressor in an attempt to maintain a more constant compressor speed.

A highly sophisticated system for temperature control is taught in US-A-4 918 932. This system uses an integrated average of the outputs of a discharge sensor and a return sensor to control the refrigeration apparatus.

US-A-3 768 545 discloses a control apparatus and a method for controlling a temperature regulating system for regulating temperature within a refrigerated space, as defined in the pre-characterizing portions of claim 1 and of claim 2, respectively. In this control apparatus both the discharge air temperature sensor and the return air temperature sensor are coupled to one input of a comparator of the regulating means, wherein a selection circuit is coupled to both sensors to complete an operating circuit for only one of these sensors, so that only one temperature indicating signal appears at any one time. The other input of comparator has applied thereto a temperature set signal from a temperature set unit. The temperature set signal also is supplied to a first input of the selection circuit which receives on a second input a reference signal which for example can be set to represent a temperature of 0°C(32°F). The selection circuit compares the temperature set signal with the reference signal and, as a function of this comparison, allows the return air temperature sensor to do the controlling when the temperature set unit is adjusted to call for a temperature above the temperature represented by the reference signal. When, however, the temperature set unit is adjusted to call for a temperature below the temperature represented by the reference signal, the selection circuit causes the discharge air temperature sensor to do the controlling.

One aspect of the present invention is a control apparatus as defined in claim 1. A further aspect of the present invention is a method as defined in claim 2.

The present invention provides a refrigeration temperature control system having multiple sensors, wherein control of the cooling/heating apparatus at any one time uses one of the multiple sensors based upon the interrelationship of the multiple sensor outputs. In this manner, the control system becomes adaptable to varying conditions, such as ambient temperature, thermal hysteresis within the refrigerated space, and refrigeration capacity as a function of refrigeration demand.

A preferred mode of the present invention utilizes a refrigeration system which can supply either cooled or heated air. By way of example and not intended to be limiting of the invention, sensors are used to monitor the temperature of the discharge and return air. An initial sensor may be selected at the termination of the pull down mode. The sensor controlling the refrigeration system may be changed as a result of the return temperature becoming lower than a set point or the discharge temperature becoming lower than a floor temperature.

The cooling/heating modes of the refrigeration system are changed in response to the various sensor outputs. The resulting control system maintains the temperature within the refrigerated space within a narrow margin about a desired operating temperature.

Other objects of the present invention and many of the attendant advantages of the present invention will be readily appreciated as the same becomes better understood by reference to the following detailed description when considered in connection with the accompanying drawings, in which like reference numerals designate like parts throughout the figures thereof and wherein:
**FIG. 1** is a schematic diagram of a refrigeration system employing the present invention;
**FIG. 2** is a flowchart of an algorithm for pull down mode;
**FIG. 3,** comprising **FIGS. 3A, 3B, 3C, 3D**, and **3E**, is a flowchart of an algorithm for effecting temperature control;
**FIG. 4** is a flowchart for an alternate manner of handling operation of the modulation valve;
**FIG. 5** is a table of the operating modes of the preferred modes of the present invention;
**FIG. 6** is a graphical representation of the operation of the pull down mode;
**FIG. 7** is a graphical representation of the conditions prompting change of sensor; and,
**FIG. 8** is a graphical representation of changes of mode of the refrigeration system.

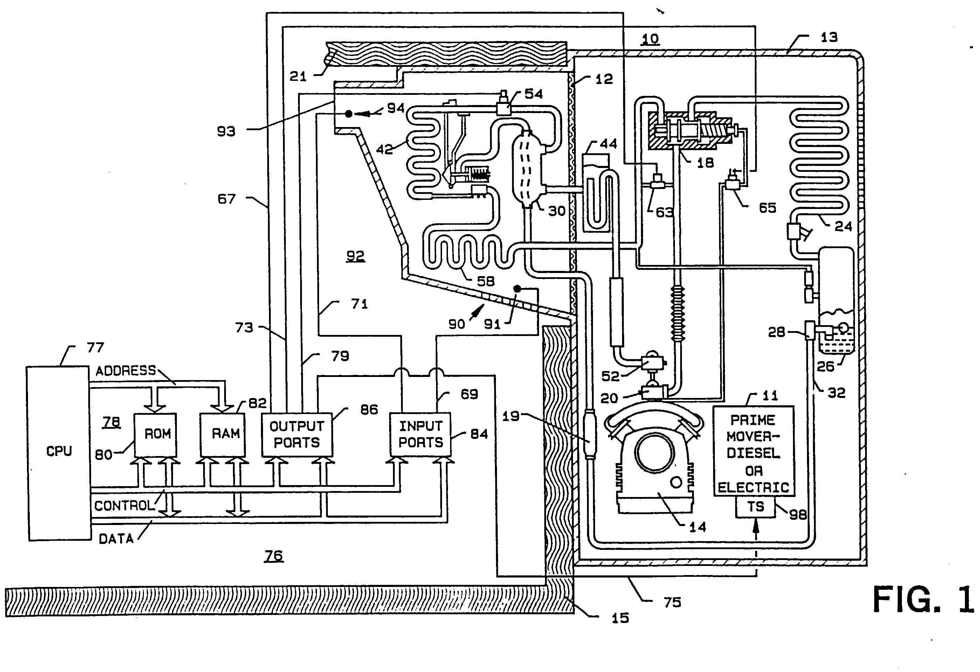

**FIG. 1** is a schematic view of a refrigeration system 10 employing the present invention. In the preferred mode, and not to be interpreted as limiting of the present invention, refrigeration system 10 is incorporated into a refrigeration truck (not shown). Starboard wall 15 and port wall 21 are partially shown encompassing refrigerated space 92. Aperture 12 is located in the forward wall of the refrigerated space for mechanical access of the refrigeration components as shown. Digital control system 76 is shown within refrigerated space 92 as a matter of convenience in illustration only. In actual operation, digital control system 76 is located outside of refrigerated space 92.

Housing 13 encompasses those components of the refrigeration system housed outside of refrigerated space 92. It contains prime mover 11, which is a source of mechanical motion to operate compressor 14. Prime mover 11 may use a number of techniques, but is preferably either a diesel engine or electric motor. The speed of prime mover 11 is controlled by digital control system 76 via cable 75 and interface 98 as is explained in more detail below.

Condenser coil 24, fed by operate compressor 14 via three-way valve 18, serves to exchange heat with the environment through the opening shown in housing 13. This exchange may be dissipation of excess heat in the cooling modes or acquisition of heat for the heating modes. Reservoir 26 collects excess liquid coolant and dispenses it through tubing 32 via exit valve 28 as required. Tubing 32 contains dryer 19. Valves 20 and 52 provide for input to and output from operate compressor 14. Reservoir 44 is placed in the suction line as shown.

Return air from refrigerated space 92 enters the evaporator coil housing via vent 90 and corresponding vents (not shown) in the bottom of the housing. Evaporation coils 42 and 58 cool or heat the return air on.the way to discharge port 93. Temperature sensor 91 monitors the temperature of the return air and temperature sensor 94 monitors the temperature of the discharge air. Heat exchanger 30 connects evaporation coils 42 and 58 to the suction line. Modulation valve 54 controls suction line flow in response to digital control system 76 connected via cable 79. Control of modulation valve 54 permits adjustment of the refrigeration system capacity in operation.

Digital control system 76 is a microprocessor controller operated by firmware/software as described in more detail below. Central processing unit 77 runs the control firmware/software. Read only memory 80 is suitable for storage of the control firmware/software and various numerical constants. Random access memory 82 is used for storage of variables and for input and output buffering. Output ports 86 couple to interface 98 via cable 75 to control prime mover 11, to the heat/cool pilot solenoid controlling the three-way heat/cool valve 18 via cable 73, hot gas bypass valve 63 via cable 67, and to modulation valve 54 via cable 79. Input ports 84 couple to return air temperature sensor 91 via cable 69 and to discharge air temperature sensor 94 via cable 71.

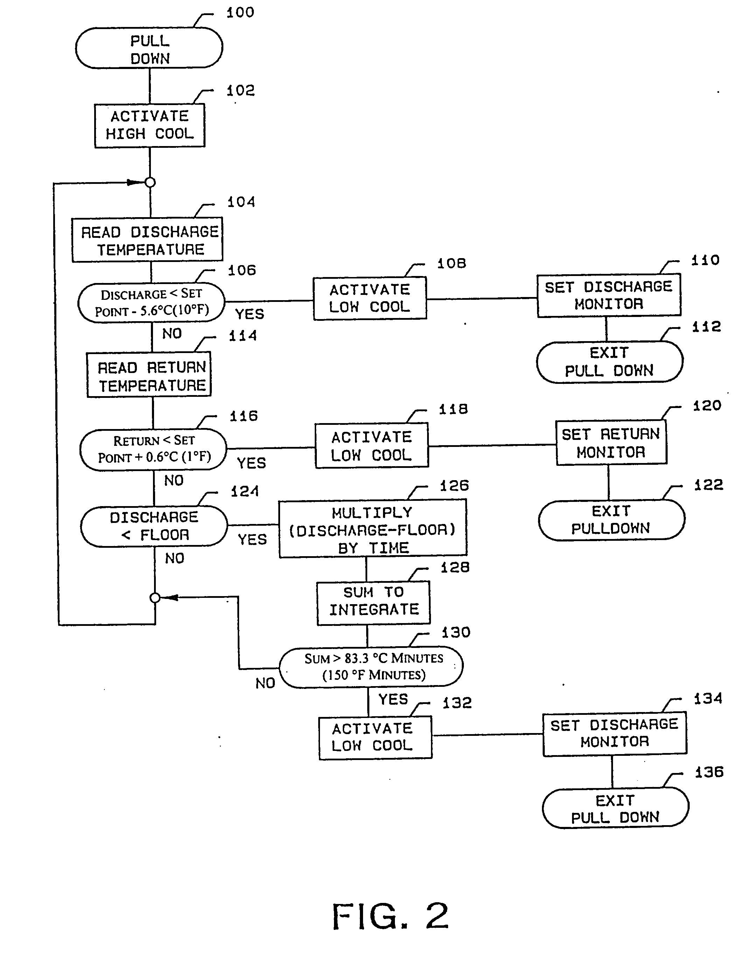

**FIG. 2** is flowchart of the operation of the pull down mode in accordance with the preferred embodiment of the present invention. The pull down mode is entered at element 100. Element 102 activates the high cool mode of the refrigeration system 10 (see also FIG. 1). In the pull down mode, refrigeration system 10 operates at its maximum cooling capacity with modulation valve 54 completely open.

The discharge air temperature is read via discharge air temperature sensor 94 at element 104. If the discharge air temperature is more than 5.6°C (ten degrees F) below the set point, element 106 routes control to element 108 which deactivates the high cool mode and activates the low cool mode of refrigeration system 10. In the low cool mode, modulation valve 54 is used to control the cooling capacity. Element 110 sets the discharge monitor before exiting pull down mode at element 112. This indicates that the pull down mode was terminated as a result of reading the discharge air temperature sensor. Such an indication implicitly relates the capacity of refrigeration system 10 to the thermal loading of the particular cargo, refrigerated space volume, ambient conditions, etc.

If the pull down mode is not terminated as a result of the discharge air temperature sensor reading by elements 106 through 112, it is because the measured discharge air temperature is greater than the set point minus 5.6°C (ten degrees F). Control is transferred to element 114, which reads the output of return air temperature sensor 91. If the return air temperature is less than the set point plus 0.6°C (1°F) element 116 routes control to element 118 which deactivates high cool mode and activates low cool mode. By setting the return monitor, element 120 indicates that the pull down mode was terminated by reading the return air temperature sensor. Exit is had via element 122.

If the pull down mode is not terminated by either of the normal termination conditions, element 124 determines whether the discharge air temperature is less than the floor temperature. If not, control is returned to element 104 to again search each of the pull down mode termination conditions.

If element 124 determines that the discharge temperature is less than the floor temperature, element 126 multiplies the difference between the discharge temperature and the floor temperature by the time. Integration is performed by element 128. Element 130 determines whether the integrated sum is greater than 83.3°C minutes (150 degree F minutes). If no, control is returned to element 104 for reconsideration of each of the three termination conditions.

If element 130 determines that the integrated sum is greater than 83.3°C minutes (150 degree F minutes), the pull down mode will be terminated as a safety measure. Element 132 deactivates the high cool mode and activates the low cool mode. Element 134 sets the discharge monitor, and exit is obtained via element 136.

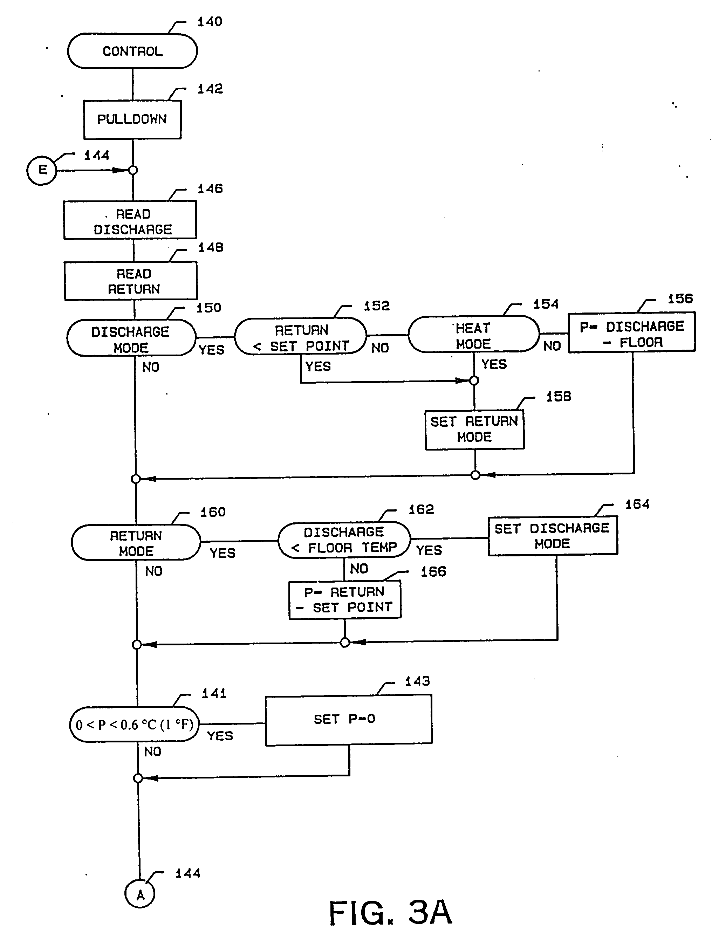

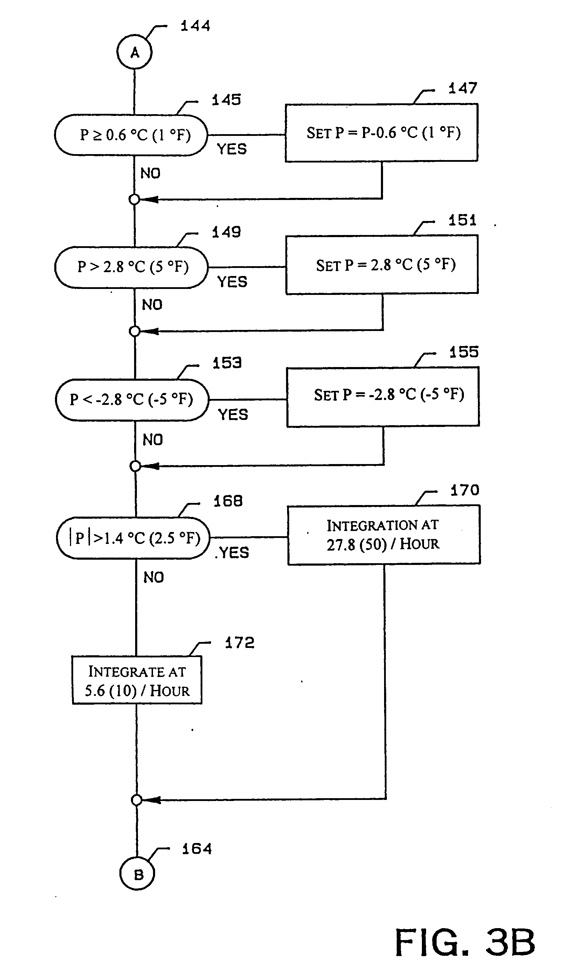

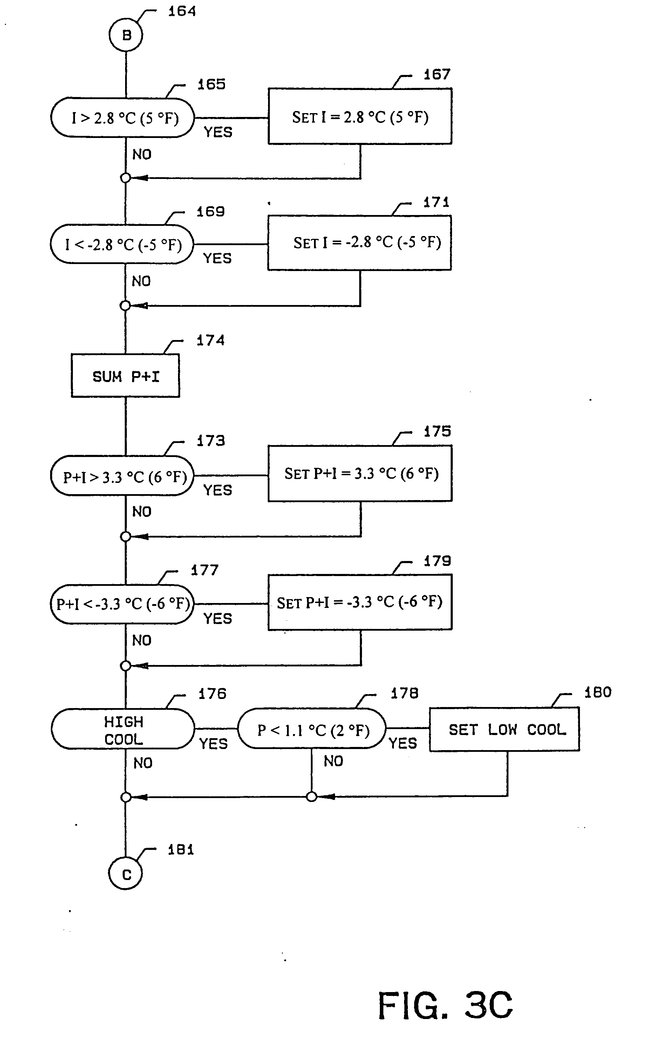

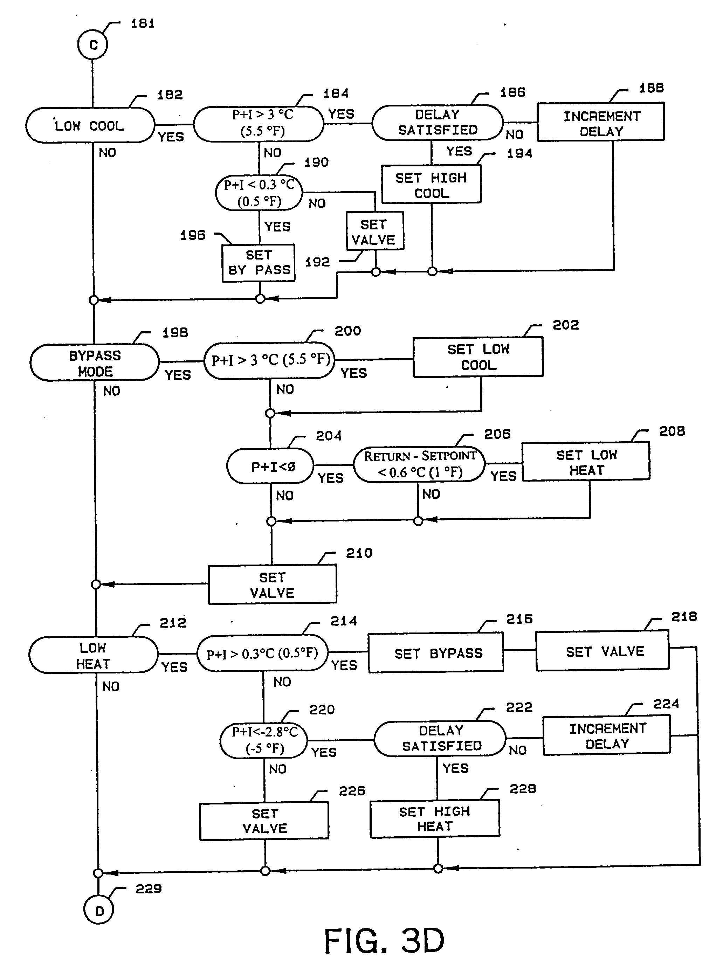

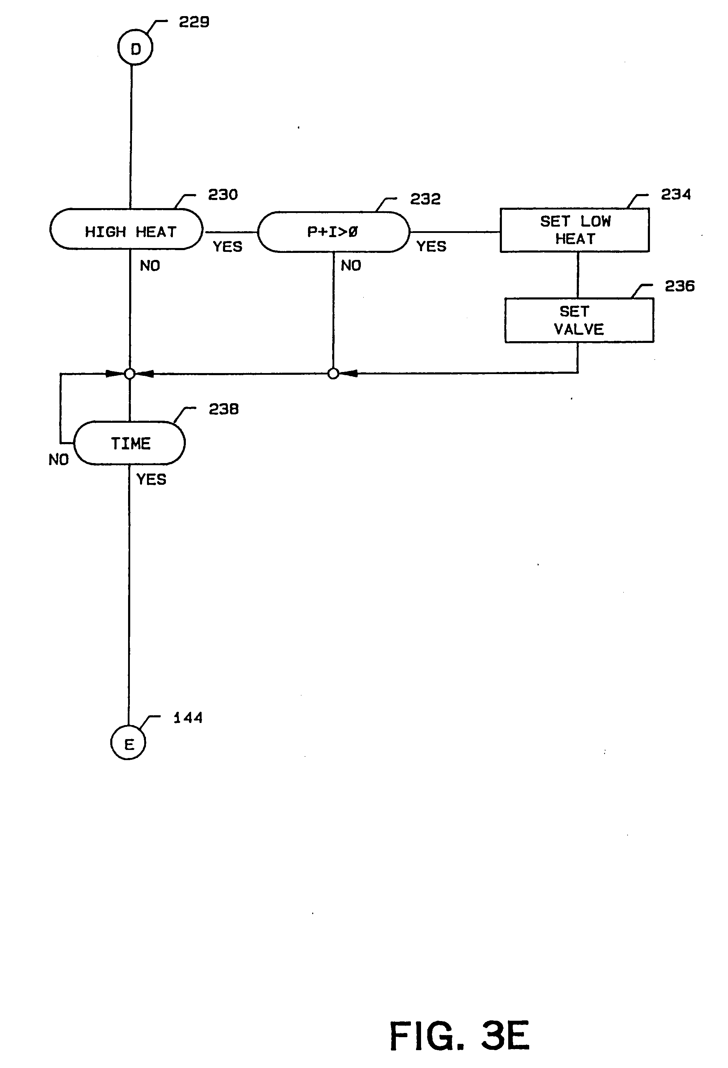

**FIG. 3,** comprising **FIGS. 3A, 3B, 3C, 3D,** and **3E,** provides a flowchart for the operation of a refrigeration control system in accordance with a preferred embodiment of the present invention. The process is begun at element 140. Pull down is accomplished at element 142. In the preferred mode and not to be considered limiting of the present invention, pull down is accomplished in accordance with the flowchart of Fig. 2.

Following pull down, element 146 reads discharge air temperature sensor 94 (see also Fig. 1). Similarly, element 148 reads return air temperature sensor 91. Element 150 determines whether the system is in discharge mode. If the system has just completed pull down, the discharge mode may have been initiated by element 110 of Fig. 2. Discharge mode may also be set by element 164 as explained in further detail below. In either case, the discharge mode means that discharge air temperature sensor 94 is the primary control sensor. This mode will continue until the mode is changed as described in more detail below.

In the discharge mode, element 152 determines whether the return air temperature as measured by return air temperature sensor 91 is less than the set point. If it is, control is given to element 158, which changes the system to return mode. If the return air temperature is not less than the set point, return mode may be set by element 158 if element 154 determines the heat exchange system is in the heat mode. This means that heat is being added rather than removed from refrigerated space 92.

Element 156 sets the proportional error (i.e. P) equal to the discharge air temperature minus the floor value, if not in the heat mode, the return air temperature is not less than the set point, and the system is in the discharge mode. The value of P is used in the manner described below to control modulation valve 54.

For return mode as determined by element 160, the primary control element is return air temperature sensor 91. In this mode, element 162 determines whether the discharge temperature is less than the floor temperature. If yes, element 164 changes the system to the discharge mode. If the discharge air temperature is not less than the floor temperature, control is routed by element 162 to element 166, which sets P (i.e. proportional error variable) to the return air temperature minus the set point.

After discharge mode processing and return mode processing, element 141 begins the scaling of P. If P is between zero and 0.6°C (one °F), control is given to element 143 which sets P to zero. This ensures that if the proportional error is a positive fraction of a degree, it will be treated as no error at all. Element 144 is merely a connector of the logic flow.

Element 145 determines whether P is greater than or equal 0.6°C to (one °F). If yes, 0.6 (one) is subtracted from P at element 147. If element 149 determines that P is greater than 2.8°C (five °F), P is set to 2.8 (five). This limits the effective positive proportional range to 3.3°C (six °F). Similarly, if element 153 finds P to be less than negative 2.8°C (five °F), element 155 sets it to negative 2.8°C (five °F). Therefore, P becomes scaled as a number between negative 2.8 (five) and positive 2.8 (five).

Integration of proportional error is initiated at element 168, which determines if the absolute value of P is greater than 1.4°C (2.5 °F). If it is, element 170 integrates at 27.8 (50) per hour. Otherwise, element 172 integrates at the rate of 5.6 (10) per hour. Element 164 is merely a connector.

If I is greater than 2.8°C (five °F) as determined by element 165, element 167 sets I equal to 2.8°C (5°F). Similarly, if element 169 finds I to be less than -2.8°C (negative five °F), element 171 sets I to -2.8°C (negative five °F). Therefore, it can be seen that the integrated proportional error (i.e. I) is scaled to be a number between -2.8°C and 2.8°C (negative five and positive five °F). Element 174 adds P and I to produce a single number, thus scaled between -5.6°C and 5.6°C (negative ten and positive ten °F).

Element 173 determines whether the sum of P and I is greater than 3.3°C (six °F). If it is, element 175 sets the sum to 3.3°C (6°F), thereby further scaling the sum to a number no greater than 3.3°C (6°F). Similarly, element 177 determines if the sum of P and I is less than -3.3°C (negative six °F). If it is, element 179 sets the sum to -3.3°C (negative six °F). Therefore, the sum of P and I is scaled to a number between -3.3°C and 3.3°C (negative and positive six °F).

If the system is in the high cool mode, element 176 routes control to element 178, which determines whether P is less than 1.1°C (2°F). If it is, element 180 switches the system to the low cool mode. If not, control is routed to element 182 via connector element 181. If the system is determined by element 182 to be in the low cool mode, element 184 determines whether the sum of P and I is greater than 3°C (5.5°F). If yes, then the error is currently within the maximum range and element 186 "debounces" the indication by requiring an appropriate delay. If the time has not yet elapsed, element 188 further increments the delay. If the delay has been satisfied, element 194 initiates the high cool mode.

If element 184 finds that the sum of P and I is not greater than 3°C (5.5°F), element 190 determines whether the sum is less than 0.3°C (5°F). If yes, the error is small enough to set the low cool with hot gas by pass mode by element 196. The modulation valve is set by element 192 if the sum of P and I is between 0.3°C and 3°C (5 and 5.5°F). A lesser level of error does not result in a change in the setting of the modulation valve.

A determination is made by element 198 concerning the low cool with by pass mode of operation. If that is the current mode, element 200 determines whether the sum of P and I is greater than 3°C (5.5°F). If greater, the error is too great to be accommodated by that mode and element 202 puts the system in the low cool mode. If element 200 finds the error sum to be less than 3°C (5.5 °F), element 204 determines whether the sum of P and I is less than 0. This means that refrigerated space 92 is cooler than necessary.

When the error is negative, element 206 determines whether the return air temperature minus the predetermined set point is less than 0.6°C (1°F). If so, the refrigerated space temperature must be raised by the low heat mode as initiated by element 208. The modulation valve position is reset by element 210.

Element 212 determines whether the refrigeration system is in the low heat mode. If yes, element 214 ascertains whether the error sum is greater than 0.3°C (0.5°F) If it is, the low cool with hot gas by pass mode is set by element 216 and the modulation valve is set by element 218. When element 214 finds the error sum to be less than or equal to 0.3°C (0.5°F), element 220 checks whether P plus I is less than -2.8°C (negative 5°F). If not, element 226 simply repositions the modulation valve. If the error sum is more negative than five, the refrigerated space is substantially cooler than desired, and following "debounce" by delay element 222, the high heat mode is set by element 228. If the delay has not yet been satisfied, element 224 simply increments the delay. Element 229 is merely a connector.

The high heat mode is checked by element 230. If that is the current mode, control is routed to element 232 which determines if the error sum is greater than zero. If it is, the refrigerated space may yet be cooler than desired, but not substantially so. Element 234 places the system in the low heat mode. The modulation valve is repositioned by element 236. Element 238 functions to return to the beginning of the logic loop after the passage of the appropriate time. Return is symbolized by connector element 144.

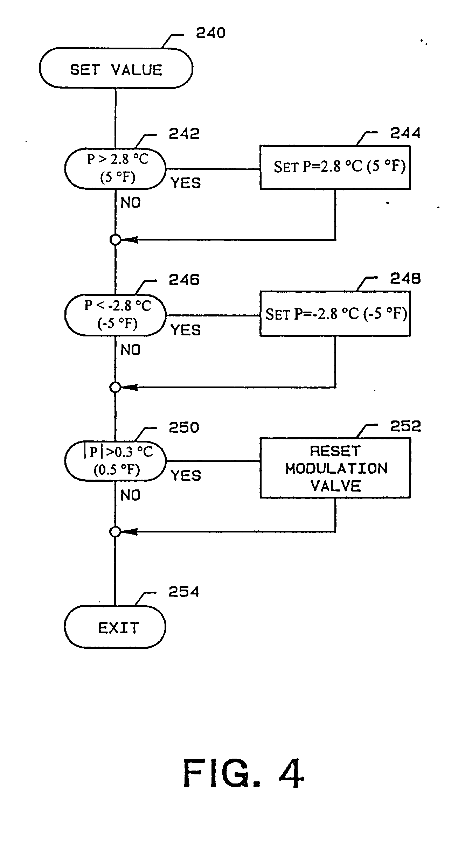

**FIG. 4** is a flow chart for the operation of an alternate means of repositioning modulation valve 54. This schematically represents the repositioning of the valve only when the error is greater than one-half degree. Entry is via element 240. Positive scaling is accomplished by element 242, which routes control to element 244 to ensure that P is not permitted to exceed positive five. Similarly, negative scaling is performed by elements 246 and 248.

After the proportional error, P, is scaled between -2.8 and 2.8°C (negative and positive five °F), element 250 determines whether the absolute value of P is greater than 0.3°C (one-half °F). In this way, the alternative embodiment repositions modulation valve 54 only when the proportional error exceeds 0.3°C (0.5°F). Exit is via element 254.

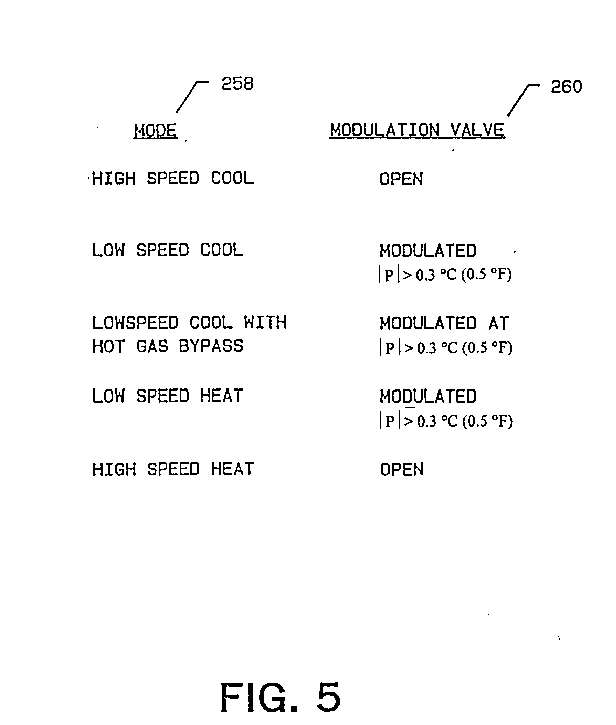

**FIG. 5** is a table showing the various operational modes 258 and the corresponding operation of modulation valve 54 shown in column 260. Note that modulation valve 54 is open in both high speed cool and high speed heat modes. The remaining modes of low speed cool, low speed cool with hot gas by pass, and low speed heat all involve repositioning of modulation valve 54. Note that in these three modes, however, the system repositions modulation valve 54 only when the absolute value of the proportional error, P, is greater than 0.28 degree Celsius (one-half degree Fahrenheit).

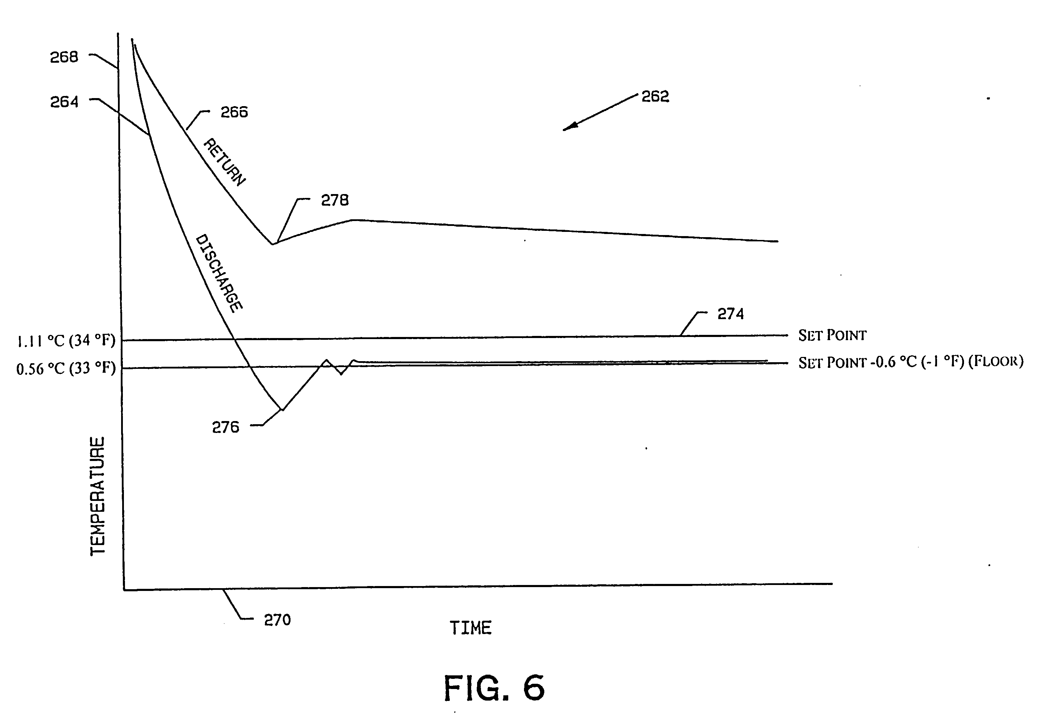

**FIG. 6** is a graphical representation 262 of the two normal conditions under which the pull down mode is terminated. The graph shows temperature 268 as a function of time 270. In this particular situation, and not to be considered as limiting of the present invention, the set point 34 is established at 1.1°C (34°F).

A first termination condition concerns discharge temperature 264 shown during the pull down mode. Termination of the pull down mode may occur whenever discharge air temperature 264 is more than 5.6°C (ten degrees F) below set point 34 as shown at point 276. This results in a setting of the discharge monitor (see also element 106 of Fig. 2).

The second normal termination condition occurs when return air temperature 266 becomes less than 0.56°C (one degree F) greater than set point 274 as represented by point 278. This second termination condition results in setting of the return monitor (see also element 116 of Fig. 2).

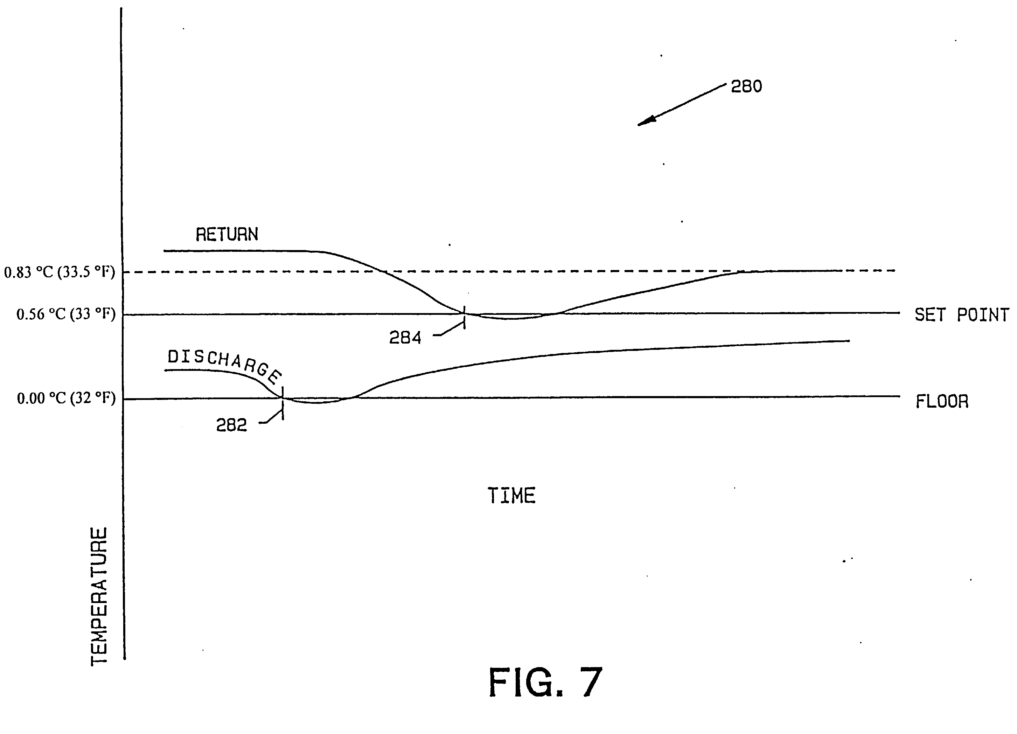

**FIG. 7** is a graphical representation 280 of the points 282 and 284 at which the system changes sensors. The temperature values given should be considered as exemplary only and are not intended to be limiting of the present invention. Point 282 shows a switch from control of the system by measurement from the return air temperature sensor to measurement from the discharge air temperature sensor. This occurs when the discharge air temperature is measured to be below the floor temperature. This is an attempt to control the system to prevent freezing of the cargo nearest the discharge port 93.

Similarly, the system is switched to control by the return air temperature sensor at point 284. This corresponds to the set point for the return air temperature. This is the normal desired operating point.

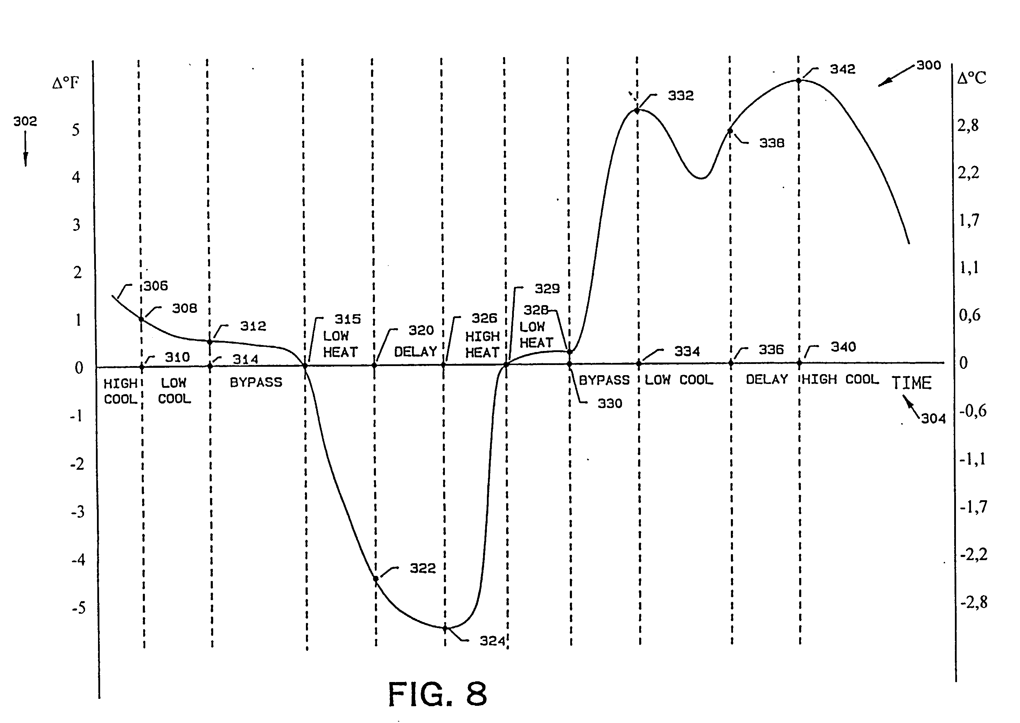

**FIG. 8** is a graphical representation 300 of the error condition values 302 which correspond to operational mode changes during time 304. In nearly all cases, this error is the sum of the proportional error, P, and the integrated proportional error, I. This is not always the case, however, as mode may change as a function of P only when a transition from high speed cool to low speed cool is made (see also **Fig. 3C**, element 178).

Curve 306 undergoes a transition from high speed cool to low speed cool at an error of 0.6°C (positive 1°F). This corresponds to time 310. The change to the low speed cool with hot gas by pass happens at an error of positive 312 at time 314. Low speed heat mode is entered at point 315 as a result of the error value crossing zero.

The system begins a delay period from time 320 to time 326 prior to changing into high speed heat mode when curve 306 crosses a -2.2°C (negative four degree F) error at point 322. The high speed heat mode is actually entered at point 324. The system reverts to the low speed heat mode at point 329 as curve 306 crosses the point of zero error. As the error increases to 0.3°C (positive one-half degree F), the system is switched to the low speed cool mode with hot gas by pass at point 328 and time 330. This corresponds to a period (i.e. time 326 to time 330) in which refrigerated space 92 has an internal temperature of slightly higher than that desired.

As the error increases to 3°C (positive 5.5°F) (i.e, the temperature has increased), the system is placed in the low speed cool mode at point 332 which corresponds to time 334. Time 336 to time 340 is the delay period during which the system remains in the low speed cool mode. The positive error increases to 3°C (5.5°F) at point 338. The high speed cool mode is entered at point 342 following the delay from 336 to 340. Again note that the error value is generally the sum of the proportional error, P, and the integrated proportional error, I. However, the transition from high speed cool mode to low speed cool mode at point 308 is controlled by the value of P only (see also Fig. 3C, element 178).

## Claims

1. Control apparatus for controlling a temperature regulating system (10) for regulating temperature within a refrigerated space (92), comprising:
a discharge air temperature sensor (94) disposed to measure the temperature of air discharged from said temperature regulating system (10) to said refrigerated space (92);
a return air temperature sensor (91) disposed to measure the temperature of air returned from said refrigerated space (92) to said temperature regulating system (10);
regulating means (18, 54, 63, 65, 76) coupled to said discharge air temperature sensor (94) and said return air temperature sensor (91) for regulating temperature within said refrigerated space (92) in response to either said discharge air temperature sensor or said return air temperature sensor; and
switching means (77) for switching said regulating means from response to said discharge air temperature sensor (94) to response to said return air temperature sensor (91) and vice versa;
**characterized by**
said switching means (77) being designed for switching said regulating means (18, 54, 63, 65, 76) from response to said return air temperature sensor (91) to response to said discharge air temperature sensor (94) when the discharge air temperature is measured to be less than a predetermined floor temperature; and
said switching means (77) being designed for switching said regulating means from response to said discharge air temperature sensor (94) to response to said return air temperature sensor (91) when the return air temperature is measured to be less than a predetermined set point for the return air temperature.

2. A method of controlling a temperature regulating system (10) for regulating temperature within a refrigerated space (92), comprising
measuring the temperature of air discharged from said temperature regulating system (10) to said refrigerated space (92);
measuring the temperature of air returned from said refrigerated space (92) to said temperature regulating system (10);
deciding whether to control said temperature regulating system (10) by said measured discharge air temperature or said measured return air temperature; and
controlling said temperature regulating system (10) on the basis of said measured discharge air temperature or said measured return air temperature as decided by said deciding step;
**characterized in that**
said deciding step selects said measured discharge air temperature if said measured discharge air temperature is less than a predetermined floor temperature; and
said deciding step selects said measured return air temperature if said measured return air temperature is less than a predetermined set point for the return air temperature.

## Patentansprüche

1. Steuervorrichtung zum Steuern eines Temperaturregelsystems (10) zum Regeln der Temperatur innerhalb eines gekühlten Raumes (92), mit:
einem Austrittsluft-Temperatursensor (94) zum Messen der Temperatur von Luft, die von dem Temperaturregelsystem (10) an den gekühlten Raum (92) abgegeben wird;
einem Rückluft-Temperatursensor (91) zum Messen der Temperatur von Luft, die von dem gekühlten Raum (92) zu dem Temperaturregelsystem (10) zurückgeführt wird;
einer mit dem Austrittsluft-Temperatursensor (94) und dem Rückluft- Temperatursensor (91) gekoppelten Regelanordnung (18, 54, 63, 65, 76) zum Regeln der Temperatur innerhalb des gekühlten Raumes (92) in Abhängigkeit von entweder dem Austrittsluft-Temperatursensor oder dem Rückluft-Temperatursensor; und
einer Schaltanordnung (77) zum Umschalten der Regelanordnung von einem Ansprechen auf den Austrittsluft-Temperatursensor (94) auf ein Ansprechen auf den Rückluft-Temperatursensor (91) und umgekehrt;
**dadurch gekennzeichnet, daß**
die Schaltanordnung (77) so ausgelegt ist, daß sie die Regelanordnung (18, 54, 63, 65, 76) von einem Ansprechen auf den Rückluft-Temperatursensor (91) auf ein Ansprechen auf den Austrittsluft-Temperatursensor (94) umschaltet, wenn die gemessene Austrittslufttemperatur niedriger als eine vorbestimmte Bodentemperatur ist; und
die Schaltanordnung (77) so ausgelegt ist, daß sie die Regelanordnung von einem Ansprechen auf den Austrittsluft-Temperatursensor (94) auf ein Ansprechen auf den Rückluft-Temperatursensor (91) umschaltet, wenn die gemessene Rücklufttemperatur niedriger als ein vorbestimmter Sollwert für die Rücklufttemperatur ist.

2. Verfahren zum Steuern eines Temperaturregelsystems (10) zum Regeln der Temperatur innerhalb eines gekühlten Raumes (92), bei dem
die Temperatur der Luft gemessen wird, die von dem Temperaturregelsystem (10) an den gekühlten Raum (92) abgegeben wird;
die Temperatur der Luft gemessen wird, die von dem gekühlten Raum (92) zu dem Temperaturregelsystem (10) zurückgeführt wird;
entschieden wird, ob das Temperaturregelsystem (10) durch die gemessene Austrittslufttemperatur oder die gemessene Rücklufttemperatur gesteuert werden soll; und
in Abhängigkeit von der in dem Entscheidungsschritt getroffenen Entscheidung das Temperaturregelsystem (10) anhand der gemessenen Austrittslufttemperatur oder der gemessenen Rücklufttemperatur gesteuert wird;
**dadurch gekennzeichnet, daß**
in dem Entscheidungsschritt die gemessene Austrittslufttemperatur gewählt wird, wenn die gemessene Austrittslufttemperatur niedriger als eine vorbestimmte Bodentemperatur ist; und
in dem Entscheidungsschritt die gemessene Rücklufttemperatur gewählt wird, wenn die gemessene Rücklufttemperatur niedriger als ein vorbestimmter Sollwert für die Rücklufttemperatur ist.

## Revendications

1. Appareil de commande pour commander un système de réglage de température (10) pour régler la température à l'intérieur d'un espace réfrigéré (92), comprenant :
un détecteur (94) de la température d'air déchargé, qui est disposé de manière à mesurer la température de l'air déchargé dudit système de réglage de température (10) et dirigé dans ledit espace réfrigéré (92) ;
un détecteur (91) de la température d'air de retour, qui est disposé pour mesurer la température de l'air renvoyé dudit espace réfrigéré (92) dans ledit système de réglage de température (10) ;
des moyens de réglage (18, 54, 63, 65, 76) reliés audit détecteur (94) de la température dudit air déchargé et audit détecteur (91) de la température de l'air de retour pour régler la température à l'intérieur dudit espace réfrigéré (92) en réponse soit audit détecteur de la température de l'air déchargé, soit audit détecteur de la température de l'air de retour ; et
un moyen de commutation (77) pour commuter ledit moyen de réglage par la réponse audit détecteur (94) de la température de l'air déchargé pour répondre audit détecteur (91) de la température de l'air de retour et inversement ;
caractérisé
en ce que ledit moyen de commutation (77) est conçu pour commuter ledit moyen de réglage (18, 54, 63, 65, 76) par la réponse audit détecteur (91) de la température de l'air de retour pour répondre audit détecteur (94) de la température de l'air déchargé lorsque la température de l'air déchargé qui est mesurée est inférieure à une température plancher prédéterminée ; et
ledit moyen de commutation (77) étant conçu pour commuter ledit moyen de réglage par la réponse audit détecteur (94) de la température de l'air déchargé pour répondre audit détecteur (91) de la température de l'air de retour lorsque la température de l'air de retour qui est mesurée est inférieure à un point prédéterminé de réglage de la température de l'air de retour.

2. Procédé de commande d'un système de réglage de température (10) pour régler la température dans un espace réfrigéré (92), comprenant
la mesure de la température de l'air déchargé dudit système de réglage de température (10) et dirigé dans ledit espace réfrigéré (92) ;
la mesure de la température de l'air revenant dudit espace réfrigéré (92) dans ledit système de réglage de température (10) ;
la prise de décision s'il faut commander ledit système de réglage de température (10) par ladite température mesurée de l'air déchargé ou par ladite température mesurée de l'air de retour ;
la commande dudit système de réglage de la température (10) sur la base de ladite température mesurée de l'air déchargé ou de ladite température mesurée de l'air de retour, la décision étant prise à ladite étape de décision ;
caractérisé en ce que
ladite étape de décision choisit ladite température mesurée de l'air déchargé si ladite température mesurée de l'air déchargé est inférieure à une température plancher prédéterminée ; et
ladite étape de décision choisit ladite température mesurée de l'air de retour si ladite température mesurée de l'air de retour est inférieure à un point prédéterminé de réglage de la température de l'air de retour.
